(19) Europäisches Patentamt European Patent Office Office européen des brevets

(11) **EP 2 804 514 B1**

(12) **FASCICULE DE BREVET EUROPEEN**

(45) Date de publication et mention de la délivrance du brevet:
**31.05.2017 Bulletin 2017/22**

(21) Numéro de dépôt: **13701852.9**

(22) Date de dépôt: **09.01.2013**

(51) Int Cl.:
***A47J 37/06*** (2006.01)   ***A47J 27/62*** (2006.01)

(86) Numéro de dépôt international:
**PCT/FR2013/050046**

(87) Numéro de publication internationale:
**WO 2013/107965 (25.07.2013 Gazette 2013/30)**

(54) **PROCÉDÉ D'INFORMATION D'UNE CUISSON D'ALIMENT ET APPAREIL ASSOCIÉ**

VERFAHREN ZUR BEREITSTELLUNG VON INFORMATIONEN ZUM KOCHEN EINES LEBENSMITTELS UND ZUGEHÖRIGE VORRICHTUNG

METHOD FOR PROVIDING INFORMATION ON THE COOKING OF A FOOD ITEM, AND ASSOCIATED APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2012 FR 1250416**

(43) Date de publication de la demande:
**26.11.2014 Bulletin 2014/48**

(73) Titulaire: **SEB S.A.**
**69130 Ecully (FR)**

(72) Inventeurs:
• **VOLATIER, Sébastien**
**21000 Dijon (FR)**
• **EXCOFFIER, Dominique**
**74150 Rumilly (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
WO-A1-95/28116     WO-A1-2007/009880
WO-A2-2007/127072     US-A1- 2006 144 384
US-A1- 2008 083 730     US-A1- 2011 062 141
US-B1- 6 425 319

EP 2 804 514 B1

**Description**

La présente invention concerne un procédé de mise en oeuvre d'un appareil de cuisson d'un aliment, comprenant au moins une plaque de chauffe au contact de laquelle on peut cuire l'aliment.

Un appareil de ce type est également concerné.

Parmi ces appareils, on connaît notamment les grils double faces qui comprennent des plaques de chauffe inférieure et supérieure entre lesquelles sont positionnés un ou plusieurs aliments devant cuire à leurs contacts. Les aliments peuvent être de la viande, du poisson, des légumes ou autre.

DE 4302190 et WO 2007/149063 divulguent un procédé et un appareil de cuisson illustratifs de l'art antérieur.

Le document US2011/062141 décrit un appareil de cuisson pour griller des saucisses. L'appareil comprend une base pivotant par rapport à un couvercle et comprenant chacun un élément de chauffe et une plaque de chauffe cuisant par contact les aliments. Des sondes de températures sont prévues sur une ou chaque plaque de chauffe.

Cependant, ces solutions connues ne permettent pas de fournir à l'utilisateur de l'appareil une information adaptée, ceci de façon appropriée.

Elles ne permettent pas non plus de fournir une cuisson automatique réellement favorable à l'aliment et au goût de l'utilisateur.

Ainsi, l'invention vise à fournir un processus de cuisson et d'informations optimisées pour obtenir :

- un résultat organoleptique favorable,
- une cuisson à coeur appropriée,
- une texture et couleur au goût de chacun,
- une facilité de fonctionnement pour l'utilisateur,
- une information permettant que l'utilisateur atteigne ceci de façon aisée, reproductible et pertinente,
- une solution jugée pratique et claire.

Pour tendre vers la satisfaction d'une partie au moins de ces objectifs, un procédé de mise en oeuvre d'un appareil de cuisson du type ci-avant décrit est proposé selon la revendication 1.

La mise en mémoire pourra être un pré-enregistrement mémorisé en usine, avant la première utilisation opérationnelle de l'appareil.

Ainsi, on limitera les risques d'erreurs et l'intervention de l'utilisateur.

Avant de poursuivre, on notera encore que l'on pourrait choisir, alors que l'appareil fonctionne et pour atteindre la cuisson interne plus ou moins importante de l'aliment alors souhaitée par l'utilisateur, qu'il y ait sélection par l'utilisateur, sur l'appareil, de l'une desdites températures (X) mémorisées, avant mise en contact de l'aliment avec la ou les plaque(s) de chauffe.

Quoi qu'il en soit, pour favoriser l'atteinte d'un résultat organoleptique favorable et d'une cuisson à coeur appropriée, on recommande que l'appareil indique ladite information à l'utilisateur, notamment à l'issue du temps de cuisson (T) calculé.

Dans une même visée et pour une texture et couleur au goût de chacun, on conseille que, l'appareil fonctionnant, et alors que l'aliment est en contact avec la ou les plaque(s) de chauffe, cet appareil mesure la température de l'une au moins des plaques de chauffe et :

- calcule le temps de cuisson de l'aliment également en fonction de cette température mesurée.
- et/ou, à l'atteinte d'une température prédéterminée de préchauffage, adresse à l'utilisateur une information qui le lui indique.

A nouveau dans une même visée, et afin d'optimiser la qualité du résultat atteint, on conseille que, l'appareil fonctionnant et alors que l'aliment est en contact avec la ou les plaque(s) de chauffe, il réalise :

- une mesure de l'épaisseur (Y) de l'aliment ainsi disposé et/ou une estimation de la surface (Z) occupée par cet aliment sur la plaque de chauffe, ce dont dépend ladite évolution de la température (X) de cuisson interne de l'aliment,
- puis ledit calcul du temps de cuisson (T) de l'aliment en fonction de l'épaisseur (Y) de l'aliment, et/ou de la surface (Z) qu'il occupe.

Afin de simplifier l'intervention de l'utilisateur dans le fonctionnement de l'appareil, sans altérer la qualité de la cuisson atteinte, on conseille que :

- ledit calcul du temps de cuisson (T) de l'aliment comprenne le calcul d'un premier temps de cuisson (T), en fonction de la température (X) la plus basse parmi celles mises en mémoire,

- à l'issue dudit premier temps de cuisson (T) calculé, il y ait indication à l'utilisateur, par l'appareil, de l'atteinte de la cuisson correspondante, puis :

    - si l'utilisateur ne retire pas l'aliment, il y ait application par l'appareil d'un second temps calculé de cuisson (T) de l'aliment, en fonction de la seconde dans l'ordre croissant desdites températures mises en mémoire (X),
    - à l'issue de ce second temps de cuisson (T) calculé, il y ait à nouveau une indication à l'utilisateur, par l'appareil, de l'atteinte de la cuisson correspondante,
    - et ainsi de suite.

Afin là encore de simplifier l'intervention de l'utilisateur dans le fonctionnement de l'appareil, sans altérer la qualité de la cuisson atteinte, on conseille que, lors dudit fonctionnement de l'appareil, on dispose l'aliment entre plusieurs dites plaques de chauffe, à leurs contacts.

Ainsi, il n'y aura notamment aucune nécessité de retournement de l'aliment et, si elle prévue, la mesure de l'épaisseur (Y) de l'aliment pourra être simplifiée.

Pour affiner la qualité de la cuisson atteinte, et donc l'intérêt pour l'utilisateur de l'information délivrée, on recommande :

- que soit prévue l'une au moins des étapes suivantes :

    * sélection de la catégorie de l'aliment à cuire,
    * sélection de l'état de congélation de l'aliment,
    * sélection d'un marquage de gril souhaité de l'aliment,

- et que la température de préchauffage dépende de la ou desdites sélections effectuées et est sélectionnée par l'appareil parmi plusieurs températures préalablement enregistrées en mémoire.

Afin à nouveau de simplifier l'intervention de l'utilisateur dans le fonctionnement de l'appareil, sans altérer la qualité de la cuisson atteinte, on conseille qu'à l'issue de l'étape (A) de préchauffage de l'appareil, le début de l'étape de cuisson (B) de l'aliment soit détecté automatiquement par l'appareil, par un abaissement au-delà d'un seuil prédéterminé de la température mesurée de la ou de l'une des plaques de chauffe.

Concernant maintenant l'appareil de cuisson en lui-même, qui comprend donc au moins une plaque de chauffe pour cuire à son contact l'aliment considéré, il se caractérise en ce qu'il comprend, pour atteindre une cuisson interne plus ou moins importante de l'aliment souhaitée par un utilisateur :

- une mémoire pour stocker différentes températures (X) avant la première utilisation opérationnelle de l'appareil,
- des moyens de mesure de l'épaisseur (Y) de l'aliment alors disposé au contact de la ou des plaque(s) de chauffe et/ou des moyens d'estimation de la surface (Z) occupée par cet aliment sur la ou l'une des plaque(s) de chauffe,
- des moyens de calcul d'au moins un temps de cuisson (T) de l'aliment ainsi disposé, en fonction :

    * de l'une au moins des températures (X) parmi celles mises en mémoire, et
    * de l'épaisseur (Y) de l'aliment, et/ou de la surface (Z) occupée par l'aliment ; et

- des moyens d'indication à l'utilisateur, par l'appareil, d'une information à l'issue dudit temps de cuisson calculé, lequel est fonction d'au moins une des valeurs de température (X) stockées.

Ces températures stockées seront, ou a priori comprendront, des températures (X) caractéristiques de cuisson internes de l'aliment, telles, par exemple pour une viande : cuisson saignante, à point, bien cuite.

Afin à nouveau de simplifier l'intervention de l'utilisateur dans le cadre de l'interface utilisateur/appareil, on conseille que les moyens d'indication comprennent :

- un afficheur lumineux,
- un référentiel chromatique présentant plusieurs couleurs ou intensités de couleur, et
- des moyens pour faire varier la couleur ou l'intensité de couleur de l'afficheur, d'une couleur ou l'intensité de couleur du référentiel à une autre.

Dans le même cadre de simplicité d'intervention de l'utilisateur et de pertinence de l'information fournie, on recommande que l'appareil comprenne au moins un capteur de température de la ou des plaque(s) de chauffe relié(s) aux moyens d'indication, pour leurs faire indiquer à l'utilisateur une information d'atteinte d'une température prédéterminée de préchauffage stockée en mémoire.

Pour favoriser l'atteinte par l'utilisateur d'une information qu'il jugera pratique, pertinente et claire, avec une solution fiable, il est en outre proposé que :

- que l'afficheur lumineux comprenne des DEL multicolores,
- et que les moyens comprennent des moyens pour enchaîner les couleurs ou intensités de couleur par variations de coordonnées chromatiques.

L'utilisateur pourrait en effet souhaiter agir lui-même, positivement, sur ce choix, via une telle sélection manuelle.

D'autres caractéristiques et avantages de l'invention ressortiront clairement de la description qui en est faite ci-après, dans le cas d'une utilisation commune des trois paramètres précités (X,Y,Z), et ce à titre indicatif et nullement limitatif, en référence aux dessins annexés, dans lesquels :

- la figure 1 représente un exemple de processus de cuisson selon un mode de réalisation de l'invention ;
- la figure 2 représente une enveloppe inférieure d'un appareil de cuisson munie de deux capteurs de température, selon un mode de réalisation de l'invention ;
- la figure 3 représente les deux courbes de températures mesurées par deux capteurs de température de l'une des enveloppes, telle l'enveloppe inférieure, et la courbe de température mesurée au coeur de l'aliment en fonction du temps,
- la figure 4 montre un exemple de cinétique de cuisson assurant une cuisson avec marquage, indépendamment du nombre d'aliments sur la plaque, avec mesure de températures par un seul capteur,
- les figures 5, 6 montrent respectivement l'évolution de la température du capteur de température prévu, en fonction du temps et de la surface occupée par l'aliment, et l'évolution de la pente de la courbe 2 en fonction du temps et de la surface occupée,
- les figures 7,8 montrent un appareil de cuisson de type gril permettant de mettre en oeuvre le procédé objet de l'invention,
- et la figure 9 schématise, en tant qu'indicateur pour l'utilisateur, un afficheur lumineux avec référentiel chromatique et des moyens pour faire varier des couleurs ou intensités de couleur(s).

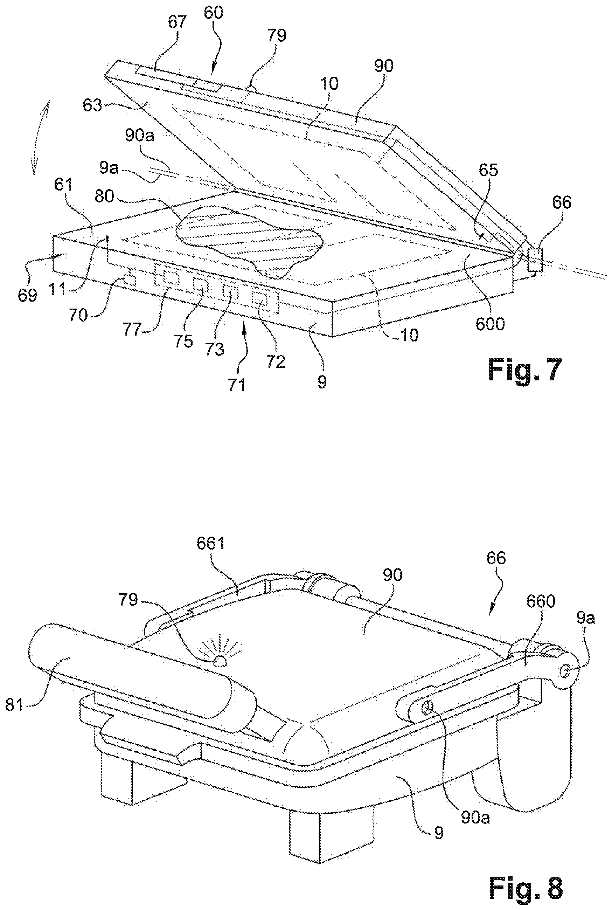

L'appareil de cuisson dans lequel est destiné à être mis en oeuvre ce qui est décrit ci-dessous comprend, sur les illustrations, deux enveloppes articulées l'une par rapport à l'autre dont une enveloppe inférieure 9 et une enveloppe supérieure 90 ; voir figure 7. L'enveloppe inférieure 9 comprend une plaque de chauffe inférieure 61 et l'enveloppe supérieure comprend une plaque de chauffe supérieure 63. Chaque enveloppe comprend une résistance chauffante 10 disposée entre la plaque de chauffe et le fond de l'enveloppe. L'aliment est cuit par contact plaque(s)/ / aliment(s). L'aliment peut être de la viande, ou autre.

Notamment dans ce cadre, on a donc eu :

- en usine, une mise en mémoire 72 de l'appareil de différentes températures (X) de cuisson internes de l'aliment,
- puis, alors que l'appareil fonctionne et pour atteindre une cuisson interne plus ou moins importante de l'aliment, alors souhaitée par l'utilisateur :

    * une mise en contact de l'aliment avec la ou les plaque(s) de chauffe 61,63 et un calcul par l'appareil du temps de cuisson de l'aliment en fonction de l'une au moins des températures (X) mémorisées,
    * et une indication par l'appareil à l'utilisateur, dans l'exemple via l'afficheur 79, d'une information qui est fonction de l'évolution de ladite température (X) de cuisson.

En d'autre termes, l'information à destination de l'utilisateur a été indiquée par l'appareil, ici via l'afficheur 79, à l'issue d'un temps de chauffage de l'aliment (par la/les résistance (s) 10) qui est fonction d'au moins une valeur de température (X) de cuisson interne de l'aliment préenregistrée en mémoire 72 de l'appareil, en usine, avant sa première utilisation opérationnelle.

Précisément, l'appareil a ici indiqué ladite information à l'utilisateur, notamment à l'issue du temps de cuisson (T) calculé.

Et il a même, en cours de cuisson, mesuré la température de l'une au moins des plaques de chauffe 61,63 et calculé le temps de cuisson de l'aliment également en fonction de cette température mesurée.

Il a même aussi, favorablement :

- réalisé une mesure de l'épaisseur (Y) de l'aliment ainsi disposé et/ou une estimation de la surface (Z) occupée par cet aliment sur la plaque de chauffe, ce dont dépend ladite évolution de la température (X) de cuisson interne de l'aliment,

-   puis conduit ledit calcul du temps de cuisson (T) de l'aliment en fonction de ces paramètres (Y) et/ou (Z).

On aura compris que l'information indiquée par l'appareil à l'utilisateur concerne (est en liaison avec) la cuisson de l'aliment.

Pour permettre à l'utilisateur de disposer son aliment à bonne température afin qu'il soit, si nécessaire, saisi de façon appropriée, l'appareil a en outre, à l'atteinte de la température prédéterminée de préchauffage, adressé à l'utilisateur une information qui le lui a indiquée.

Dans ce cadre, on a préféré ici que :

-   soient aussi conduites l'une au moins des étapes suivantes :

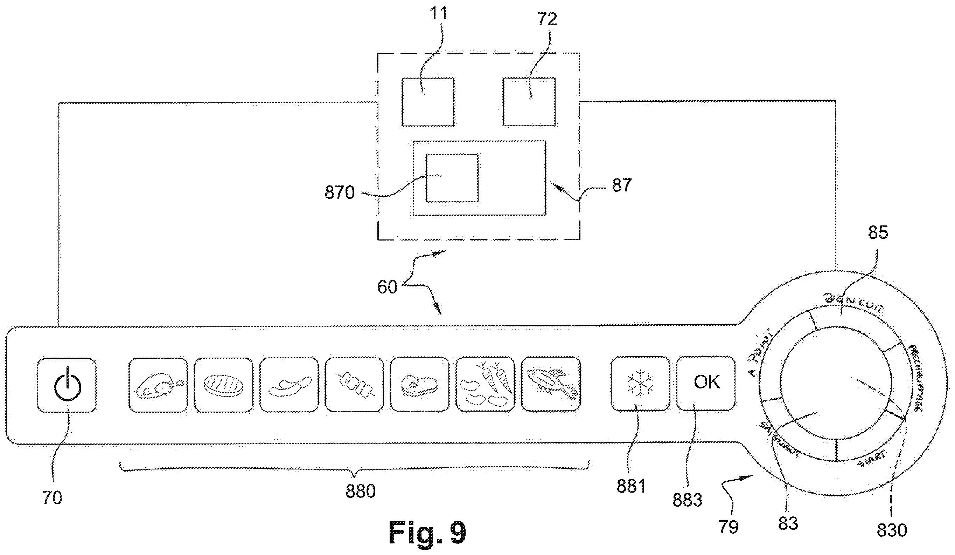

    * sélection de la catégorie de l'aliment à cuire (boutons 880 figure 9),
    * sélection de l'état de congélation de l'aliment, si tel est le cas (bouton 881),
    * sélection d'un marquage de gril souhaité de l'aliment,
    * si nécessaire validation finale du choix (bouton 883),

-   et que la température de préchauffage θ' dépende de la ou desdites sélection(s) effectuée(s) et soit sélectionnée par l'appareil parmi plusieurs températures préalablement mémorisées (en 72).

Concernant maintenant l'appareil de cuisson des figures 7 et 8, il comprend donc des moyens 79 d'indication à l'utilisateur de l'information (de cuisson) attendue, liée à la fin atteinte dudit temps de cuisson calculé.

Plus précisément, la figure 9 montre que les moyens d'indication 79, ici visuels, comprendront de préférence :

-   un afficheur lumineux 83,
-   un référentiel chromatique 85 présentant plusieurs couleurs ou intensités de couleur, et
-   des moyens 87 pour faire varier la couleur ou l'intensité de couleur de l'afficheur, d'une couleur ou l'intensité de couleur du référentiel à une autre.

De préférence, l'afficheur lumineux comprendra, comme schématisé figure 9, des diodes électroluminescentes multicolores 830 et les moyens de variation 87 comprendront des moyens 870 pour enchaîner les couleurs ou intensités de couleur par variations de coordonnées chromatiques.

Ces moyens pourront être une carte électronique pilotant le changement de couleur. Les diodes électroniques multi-couleurs principales peuvent être composées de trois petites diodes émettant chacune dans une couleur primaire. La technique de pilotage (qui peut être de type PWM) peut permettre de moduler indépendamment les largeurs d'impulsions des trois couleurs qui composent la diode (telles bleu, vert, rouge). Toutes les diodes principales sont pilotées indépendamment.

Les moyens d'indication 79 seront favorablement reliés à au moins un capteur de température (11 ou 11a, 11b ci-après) prévu pour détecter celle de la ou des plaques 61,63, pour leur faire indiquer à l'utilisateur une information d'atteinte la température prédéterminée de préchauffage stockée en mémoire 72.

Quant aux moyens de variation 87, ils seront, au moins fonctionnellement, reliés au(x) microcontrôleur(s) cité(s) plus loin 73,75,77 et donc aux moyens également cités plus loin 65,66,67,69/11(ou 11a,11b),70,71,72,79 et aux résistances 10, pour leur pilotage.

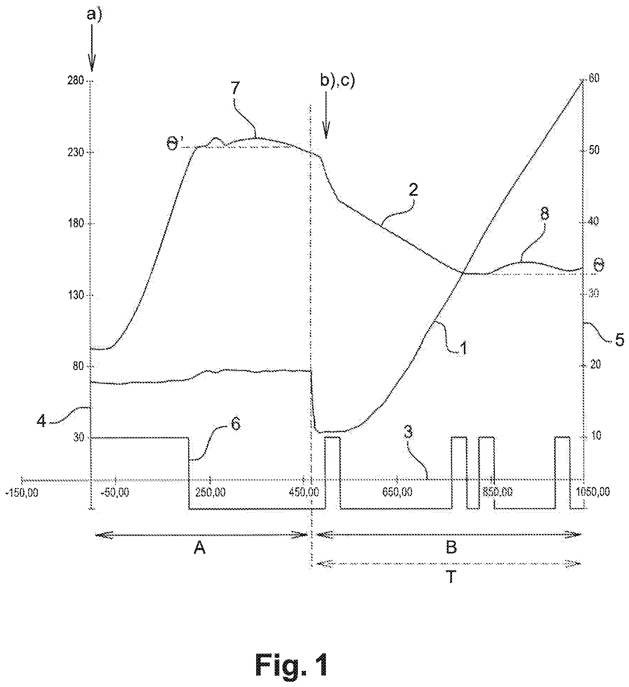

Ceci précisé, le procédé de cuisson en lui-même comprendra, comme illustré sur la figure 1, un préchauffage A) de l'appareil suivi d'une cuisson B) de l'aliment pendant un temps (T).

La figure 1 représente comme exemple un processus de cuisson d'une viande non congelée. La courbe 1 représente l'évolution de la température mesurée au coeur de l'aliment en fonction du temps. Ici, elle a été acquise en usine et n'existe pas nécessairement dans l'appareil commercialisé. Certains au moins de ces points sont toutefois entrés en mémoire 72 de l'appareil. La courbe 2 représente l'évolution en fonction du temps de la température de l'une des plaques de chauffe, laquelle est mesurée lors du fonctionnement commercial de l'appareil. L'axe des abscisses 3 représente le temps en seconde, l'axe des ordonnées de gauche 4 représente la température mesurée de la plaque de chauffe concernée, telle 63, et l'axe des ordonnées de droite 5 représente la température mesurée au coeur de l'aliment. La courbe 6 représente le cycle de chauffe en fonction du temps (puissance consommée). Lors de l'étape A), la température de la plaque mesurée monte rapidement jusqu'à un palier 7 correspondant à une température de préchauffage. Dans l'exemple 2, cette température est d'environ 230°C. Une fois ceci atteint, l'aliment est posé sur la plaque de chauffe inférieure. La température élevée de contact permet d'effectuer un marquage sur l'aliment. Une croute est alors formée.

L'enfournement de l'aliment dans l'appareil de chauffe correspond au début de l'étape de cuisson de l'aliment B). La température de la plaque de chauffe mesurée (courbe 2) baisse jusqu'à un palier de stabilisation en température 8, correspondant à environ 150°C dans l'exemple.

A titre de confirmation (puisqu'a priori non disponible dans l'appareil), la courbe 1 montre que la température de l'aliment monte entretemps progressivement jusqu'à une température qui est fonction de la catégorie de l'aliment, voire de son état de congélation.

Ce que la figure 1 ne montre pas est qu'avant tout processus de cuisson, mené par exemple avec l'appareil schématisé figure 9, il y a typiquement pu y avoir eu en usine (donc avant commercialisation de l'appareil), une mise en mémoire 72 de l'appareil notamment de différentes températures (X) de cuisson internes de l'aliment (de préférence de plusieurs aliments) permettant d'atteindre, pour au moins un aliment donné, plusieurs niveaux de cuisson à coeur (interne).

Ensuite, comme indiqué ci-avant, on peut donc choisir qu'il y ait sélection positive par l'utilisateur, sur l'appareil, de l'une de ces températures (X) mémorisées.

Dans ce cas, appareil vendu, lorsque son utilisateur va l'utiliser, ce qui suit pourra être mis en oeuvre :

- mise sous tension de l'appareil 1, par exemple par appui sur un bouton M/A 70 ;
- via l'interface 67 de l'appareil, et dans le menu que celle-ci affiche alors, sélection donc sur l'appareil, par l'utilisateur, de préférence d'abord d'une catégorie d'aliment à cuire (choix par exemple entre viande et poisson), puis ici d'un degré (X) de cuisson interne souhaité de l'aliment, parmi plusieurs disponibles (si prévu) ;
- détermination automatique:

  - des températures θ : température maximum de préchauffage (avant mise en place de l'aliment) compte tenu de la catégorie d'aliment, si celle-ci est sélectionnable, et θ' : température minimum ou finale de cuisson de l'aliment (après sa mise en place de l'aliment), à nouveau compte tenu de sa catégorie, si prévu,
  - et du rapport cyclique : évolutions de l'énergie électrique fournie aux résistances 10 à partir de la source prévue (telle le secteur) ; définition et application des variations, qui peuvent être binaires - maximum ou nulle -, de cette énergie ; voir courbe 6 ;

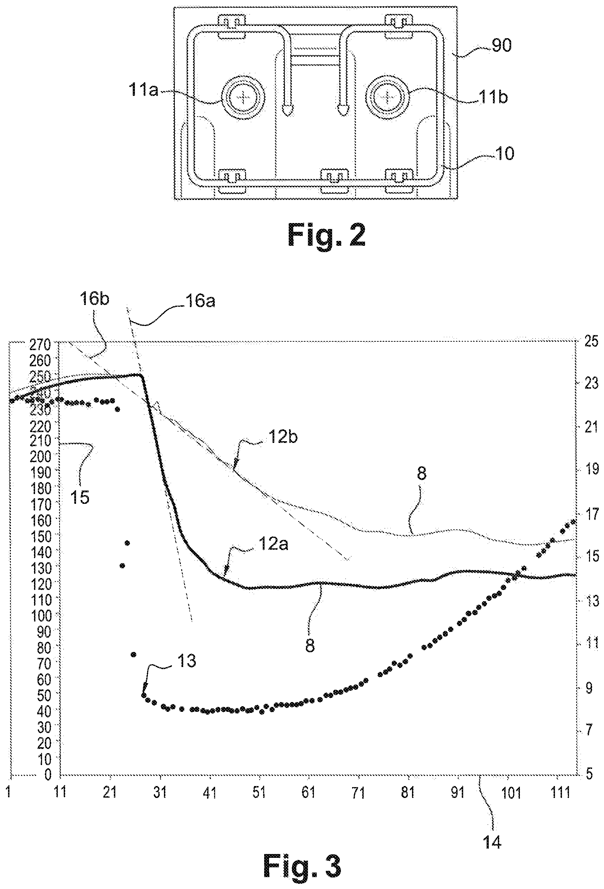

- préchauffe automatique de l'appareil (étape A), via les résistances 10, avec application d'un temps prédéterminé de préchauffe défini lors des tests usine, entré alors en mémoire 72 et qui permet d'atteindre la température stabilisée θ pendant l'intervalle prévu;
- appareil ouvert, mise en place de l'aliment ;
- fermeture de l'appareil ; ceci sera de préférence nécessaire pour activer le début de la cuisson de l'aliment (étape B), avec alors de préférence automatiquement une mesure de l'épaisseur (Y) de l'aliment introduit entre les plaques 61,63 ;
- l'appareil détecte alors automatiquement un abaissement brutal de la température mesurée de la plaque de chauffe concernée (contact avec l'aliment), après quoi la température se stabilise sensiblement ; voir zone 8 figures 1 ou 3. De préférence ce début d'étape de cuisson B) sera détecté :

  - en fonction de cet abaissement de température(s) mesurée (s) (en temps, vitesse, pente...),
  - et par comparaison avec un ou plusieurs seuils prédéterminés de la chute détectée ;

- à partir de cette/ces variations de température mesurées sur la plaque concernée du gril, il peut alors y avoir estimation de la charge (ou surface occupée par l'aliment) : paramètre (Z) précité ;
- toujours de préférence au début de cette étape de cuisson, il y a par ailleurs estimation/calcul par l'appareil du temps de cuisson (T) requis. Ce temps est donc celui, indiqué par exemple figure 1 (T), compris entre le moment où l'aliment est mis en contact avec la/les plaque(s) de chauffe et celui où il en est retiré, en fin de cuisson. Le moment d'origine peut typiquement être celui de la fermeture de l'appareil, s'il s'agit d'un gril, suivi quasi immédiatement par la chute de température détectée de la plaque mesurée. Le moment de fin est aussi celui où l'annonce de la cuisson atteinte est faite par l'appareil. La température/le degré (X) de cuisson interne attendu(e) est atteint(e) ;
- via par exemple un microcontrôleur 73,75, et un indicateur 79 accessible à l'utilisateur, on prévoit ensuite que l'utilisateur soit, à la fin du temps calculé, informé par l'appareil de l'atteinte du degré (X) de cuisson attendu ; l'utilisateur est ainsi invité à retirer son aliment ;
- l'appareil peut alors par exemple maintenir automatiquement au chaud l'aliment en attendant que l'utilisateur ouvre l'appareil ;
- l'appareil peut enfin être mis hors tension, par exemple via l'interrupteur 70.

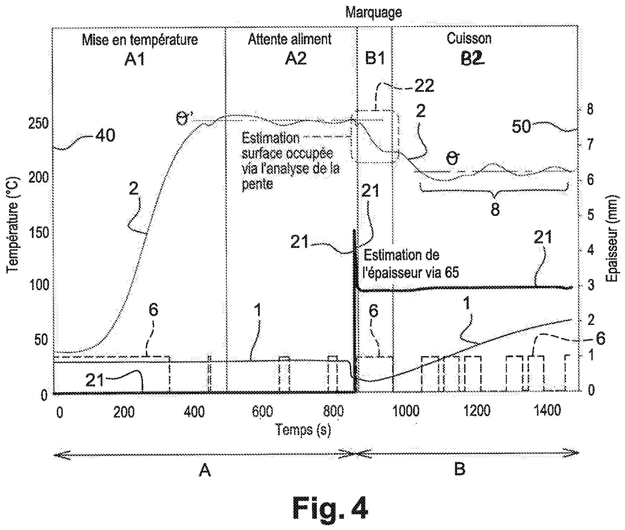

Ainsi, la fin de cuisson s'établit à l'issue du temps T estimé/calculé, lorsqu'une fois l'aliment placé dans l'appareil préchauffé, la température mesurée, après avoir chuté du fait de cet aliment, se stabilise (zone 8 figure 1 ou 4), par exemple entre deux valeurs dont l'écart a été prédéfini et entré en mémoire 72 ;

Outre ce qui précède, l'interface 67 avec l'utilisateur pourra permettre de sélectionner dans le menu l'état de congélation de l'aliment (congelé ou non) et/ou l'importance du marquage de gril souhaité (fortement marqué ou autre).

L'interface 67 peut être un écran tactile.

Dans le synoptique ci-dessus, le temps de cuisson (T) de l'aliment lors de l'étape B) précitée est déterminé selon un processus où on a conduit les étapes ci-après présentées :

- une étape de mesure de l'épaisseur (Y) de l'aliment,
- une étape d'estimation par l'appareil de la surface (Z) occupée par l'aliment sur l'une des plaques de chauffe,
- une étape de calcul dans l'appareil d'un temps de cuisson (T) de l'aliment en fonction :

  * du degré (X) de cuisson interne de l'aliment,
  * de l'épaisseur (Y) de l'aliment,
  * de la surface (Z) occupée par l'aliment.

Les degrés (X) sélectionnables pourront correspondre à des cuissons respectivement saignante, à point et bien cuite. A chaque cas correspondra, en mémoire 72, une température de cuisson tirée de la courbe 1, en usine. Ainsi, on pourra avoir trois valeurs du paramètre, respectivement 55°C, 65°C et 75°C.

Pour mesurer l'épaisseur (Y) de l'aliment, on peut prévoir sur l'appareil des moyens capteur 65 détectant la distance moyenne entre les plaques de chauffe inférieure et supérieure, 61,63 et en particulier leur écartement relatif lorsque l'aliment est introduit entre elles. On peut alors obtenir une épaisseur d'aliment qui est fonction de la distance de déplacement relatif des plaques entre elles, lors de la fermeture de l'appareil.

Figure 7, on constate que ces plaques de chauffe sont mobiles en rotation l'une par rapport à l'autre. Lorsque la plaque de chauffe supérieure est en position horizontale après s'être déplacée vers la plaque de chauffe inférieure, un mécanisme 66 de positionnement peut déplacer linéairement et verticalement la plaque de chauffe supérieure (en rapprochant ou écartant l'une de l'autre ces plaques) jusqu'au contact avec l'aliment interposé.

A titre d'exemple, les moyens capteur 65 peuvent comprendre au moins un capteur optoélectronique de proximité inductif. Il pourrait en alternative s'agir d'un capteur d'effort mesurant par exemple l'effort sur une lame de ressort via une jauge de contrainte, ou d'un capteur de position incrémentale magnétique utilisant l'effet Hall (à nouveau mesure de distance).

Une fois le préchauffage terminé, le déclenchement automatique, par l'appareil, de l'étape de cuisson ne se produira de préférence que si les moyens capteur 65 mesurent une valeur ni nulle ni « infinie ».

Figure 8, on voit que les moyens ou le mécanisme 66 de positionnement comprennent des bras 660,661 montés articulés entre les enveloppes inférieure 9 et supérieure 90. Ces bras, ici deux, 660,661, sont fixés, ici latéralement, près de l'un des bords de chacune des enveloppes, de sorte que deux axes de rotation parallèles 9a,90a (horizontaux) passant par les fixations des bras 660,661 sont définis, pour les mouvements relatifs entre les plaques de chauffe. A l'opposé, une poignée 81 fixée à l'une des enveloppes, ici 90, aide à la manoeuvre.

Durant l'étape d'estimation de la surface (Z) précitée, des moyens d'estimation de cette surface déterminent si la plaque de chauffe, pourvue du/des compteur(s) de charge, est complètement chargée, partiellement, ou pas (appareil de cuisson vide). Cette estimation peut donc être obtenue à partir de variations de données de températures mesurées sur l'une (au moins) de ces plaques.

L'étape comprendra de préférence, avantageusement pendant un temps (T) prédéfini qui commence à partir de la détection du début de l'étape de cuisson B):

- une sous-étape de mesure de la température de la plaque de chauffe équipée (plaque supérieure 63 figure 7), - puis une sous-étape de détermination de cette surface (Z) en fonction:

  * a) du temps calculé pour atteindre une pente stabilisée sensiblement nulle (zone précitée 8 figures 1, 3) d'évolution de cette température mesurée,
  * b) ou d'une chute de cette température comparée à un seuil prédéterminé (valeur(s) en amplitude, en atteinte d'une température minimum et/ou en pente(s), avec dans le cas a), l'existence d'une relation entre la surface et la quantité d'énergie à apporter pour compenser les pertes caloriques dues à la mise en place de l'aliment.

Le calcul de ce paramètre pourra être réalisé par un moyen de calcul tel qu'un microcontrôleur équipant l'appareil.

Avec une solution multi-capteurs, comme par exemple avec les deux capteurs de température 11a,11b, montrés figure 2 (même si l'on préférera placer un premier capteur centré d'un côté (tel 11a figure 3), et un second décentré), des comparaisons, de préférence de valeurs de pentes, calculées pour l'un et l'autre de ces capteurs, avec un seuil prédéterminé, stocké en mémoire 72 pourra permettre de définir les valeurs du paramètre (Z) à utiliser.

Avec la solution à deux capteurs de température 11a,11b montrés figure 2 et si le paramètre retenu est la pente, les seuils suivants pourront être considérés:

- si pente>-0,5°C/s pour les deux capteurs => surface Z peu/pas chargée => valeur Z1,
- si pente<-0,5°C/s pour l'un des capteurs, avec => surface Z moyennement chargée => valeur Z2,
- si pente<-0,5°C/s pour les deux capteurs => surface Z complètement chargée => valeur Z3.

En tant que capteur(s) de température on pourra choisir des sondes à coefficient de température négatif (CTN). Ils pourront être logés derrière la plaque de chauffe qui les recouvrira intérieurement.

Des moyens de calcul permettent ensuite de calculer le temps de cuisson (T) de l'aliment en fonction du degré de la température (X) de cuisson interne souhaité, ici sélectionnée, de l'aliment, de l'épaisseur (Y) de l'aliment, et/ou de la surface (Z) qu'il occupe.

Ce temps de cuisson (T) de l'aliment peut être déterminé par une méthode de calcul de corrélation quadratique avec la fonction du second degré suivante :

$$(1): \ T(X,Y,Z)=A1+A2*X+A3*Y+A4*Z+A5*X^2+A6*Y^2+A7*Z^2+A8*X*Y$$

$$+A9*X*Z+A10*Y*Z.$$

Les coefficients A1, A2, A3, A4, A5, A6, A7, A8, A9 et A10 sont prédéfinis pour chaque menu, pour des conditions de températures prédéfinies. Ils sont stockés dans des moyens de stockage (tels la mémoire 72). Ce sont des constantes.

En variante, le temps de cuisson (T) de l'aliment peut être déterminé par une méthode de calcul de corrélation linéaire avec la fonction du premier degré suivante :

$$(2): \ T(X,Y,Z)=B1+B2*X+B3*Y+B4*Z$$

Les coefficients B1, B2, B3, et B4 sont prédéfinis pour chaque menu, pour des conditions de températures prédéfinies. Ils sont stockés dans lesdits moyens de stockage (mémoire 72 par exemple). Ce sont des constantes.

Concernant l'estimation de la surface occupée par les aliments, on a décrit ci-avant la possibilité d'une estimation de la surface (Z) via (au moins) deux capteurs de température (valeurs Z1, Z2...).

Une autre possibilité consiste à n'utiliser qu'un seul capteur d'énergie (repéré 11 figure 7) qui peut être une sonde de température placée, comme précédemment, en contact avec l'une des plaques de chauffe. Favorablement, ce capteur sera déporté en(vers la) périphérie de la plaque de chauffe concernée, en face d'une zone de la plaque où on ne doit (ou peut) pas placer d'aliment. Le capteur pourra remplir deux fonctions, en relation avec le/les microcontrôleur(s) :

- réguler la température de la plaque,
- mesurer la quantité d'énergie à fournir pour compenser les pertes liées à la présence de l'/des aliment(s) sur la plaque. En supposant que les aliments sont des steaks (voir figures 4-6), il sera possible de corréler ceci avec le nombre de tels steaks présents en cuisson sur la plaque, ou l'importance de la surface occupée.

Ainsi :

- une pente au-delà d'un premier seuil retenu et stocké en mémoire 72 pourra correspondre à une plaque de chauffe complètement occupée par l'aliment,
- une pente en-deçà d'un second seuil pourra correspondre à une plaque de chauffe inoccupée,
- et une pente entre les deux seuils pourra correspondre à une plaque de chauffe partiellement occupée.

Pour illustrer cela, on voit figure 4 un exemple de cinétique de cuisson établi sur les base suivantes : Cuisson de trois pavés/steaks découpés dans un rond de gite, épaisseur commune de 29 mm, surfaces identiques des plaques 61,63 sensiblement complètement occupées (sauf juste en périphérie où se trouve le capteur de température 11 ; figure 7), température à coeur attendue (en fin de cuisson) d'environ 60°C, temps de cuisson d'environ 23 mn (calculé).

Cette cinétique pourrait être considérée comme valable quelle que soit la méthode d'estimation de la surface utilisée ; elle pourrait donc remplacer l'illustration de la figure 1 où la courbe 2 concernait une application multi-capteurs.

Figure 4, l'axe des abscisses représente le temps en seconde, l'axe des ordonnées de gauche 4 représente la température (°C). L'axe des ordonnées de droite 50 représente l'épaisseur (mm) de l'aliment. La courbe 21 représente l'évolution de l'épaisseur de l'/des aliment(s) présent(s) sur la plaque de chauffe en fonction du temps. L'évolution de la courbe 2 est comparable à celle de la figure 1 (voir commentaires ci-avant). Après l'étape A (= A1 + A2) de préchauffage, l'enfournement de l'aliment dans l'appareil de chauffe correspond au début de l'étape B(= B1 + B2) de cuisson de cet aliment.

Il y apparaît :

- une cuisson en deux phases :

    * une phase B1 de marquage;
    * une phase B2 de cuisson à plus basse température, pour laisser le temps aux calories de migrer vers le coeur sans risquer de calciner la périphérie ;

- un temps de marquage approximativement proportionnel à la surface d'échange (Z) et donc à la quantité d'aliments.

Pendant toute la phase carré pointillé 22 où il y a marquage de l'(ou des) aliment (s), il n'y a pas d'inversion du cycle de délivrance de la puissance électrique (la puissance/l'énergie électrique délivrée aux résistances demeure maximum).

C'est de préférence l'intervalle pendant lequel la phase d'analyse (B1, carré pointillé 22, figure 4) est réalisée : valeurs Y et/ou Z, temps T calculé.

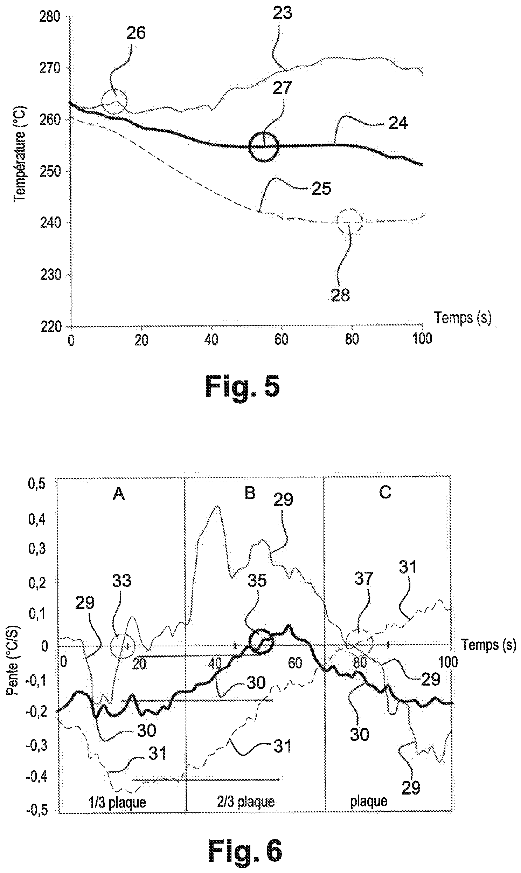

Concernant l'estimation de la surface (Z) occupée par les aliments, les figures 5,6 montrent respectivement :

- l'évolution de la température détectée en fonction du temps et de ladite surface occupée,
- l'évolution de la pente de la courbe 2 en fonction du temps et de la surface occupée.

Figures 5,6 l'origine du temps (T = 0) est le moment de l'enfournement de l'aliment dans l'appareil de chauffe, soit ici (comme indiqué figures 1 et 4) le début de l'étape de cuisson de l'aliment (B).

Figure 5, les courbes 23,24,25 correspondent respectivement aux cas 1,2,3 steaks. Les cercles 26,27,28 montrent les annulations de pente respectives.

Figure 6, l'axe des ordonnées correspond à la pente (en °C/s), l'abscisse est le temps (en s).

Les courbes 29,30,31 correspondent respectivement aux cas 1,2,3 steaks. Les cercles 33,35,37 montrent les annulations de pente respectives (passage par l'abscisse des temps).

L'analyse de la pente concernée permet de mettre en évidence qu'il existe des corrélations entre :

- la surface d'échange et la pente minimum, ou la chute de température à un instant donné,
- la surface d'échange et l'instant où la pente s'annule (instant où les pertes liées aux échanges entre les aliments et la plaque ont été compensées).

La deuxième relation (figure 6) est jugée plus fiable car moins dépendante de la précision des calculs (cf. dispersion sur courbe avec un steak) et de la position du capteur sur la plaque.

On peut ensuite envisager deux méthodes pour estimer la surface occupée:

- établir via un plan d'expérience conduit en usine, avant la commercialisation de l'appareil, la fonction affine (y=ax+b) qui relie la surface occupée à l'instant où la pente s'inverse,
- identifier trois zones :

    * zone A, plaque faiblement chargée (1/3 de la plaque occupée),
    * zone B, plaque moyennement chargée (2/3 plaque),
    * zone C, plaque fortement chargée (3/3 plaque),

- puis tester la correspondance du système à l'une ou l'autre de ces trois zones.

Cette méthode est potentiellement plus facile à synchroniser avec la communication à l'utilisateur des informations correspondantes (indicateur 79).

Dans ce cas :

- il faut que le capteur 11 soit positionné sur une zone sans aliment, tel le pourtour de la plaque :,
- on prend en compte, comme expliqué ci-avant :

* l'existence d'une corrélation entre l'inversion de la pente d'évolution de la température détectée par ce capteur et la surface d'échange entre la plaque de chauffe concernée et l'aliment (les aliments) disposés contre cette plaque : passage par une pente d'évolution nulle ; voir ci-avant,
* l'existence d'une corrélation entre la pente mini et ladite surface d'échange.

De ce qui précède, on aura compris que deux méthodes ont donc été pensées pour l'estimation de la surface occupée :

- une première pouvant n'utiliser qu'un seul capteur de température 11 déporté en périphérie de la plaque concernée, avec donc l'existence d'une relation entre la surface occupée par l'aliment interposé et la quantité d'énergie à apporter pour compenser les pertes (temps observé pour une pente de la courbe 2 égale à 0), ou une chute de température plus ou moins importante (seuil de température), ou une chute de température plus ou moins rapide (seuil de pente),
- une seconde utilisant plusieurs capteurs température, tels 11a,11b, répartis sur ou sous la plaque concernée, avec alors présence ou non d'aliment(s) aux environs de deux, trois, voire quatre capteurs.

A noter également que si l'on dispose le(s) capteur(s) de température 11 ou 11a,11b de manière qu'il(s) détecte(nt) la température de la plaque de cuisson (ici supérieure) qui ne vient au contact de l'aliment que quand les deux plaques 61,63 se déplacent l'une par rapport à l'autre pour fermer l'appareil (moment où temps de cuisson =0), on pourra alors disposer de deux informations pour déclencher le début de la cuisson (phase B): celle issue du/des capteur(s) de température et celle du capteur d'épaisseur.

Figure 7, on notera encore que l'appareil 60 de cuisson du type gril viande comprend donc les plaques de chauffe inférieure 61 et supérieure 63, ainsi que ce qui suit :

- les moyens 65 de mesure de l'épaisseur (Y) d'un ou plusieurs aliments (dénommé ici « l'aliment » 80), tel le ou les steaks précités (ces moyens 65 sont liés fonctionnellement au moyen 66 de rapprochement/écartement relatif des plaques 61,63),
- les moyens 67 de sélection pour sélectionner, parmi plusieurs pré-enregistrements, le degré/la température (X) de cuisson interne souhaitée de l'aliment ;
- des moyens 69 d'estimation de la surface (Z) occupée par l'aliment sur l'une des plaques de chauffe ; et
- des moyens 71 de calcul du temps de cuisson (T) de l'aliment.

Une chambre 600 de cuisson pour l'aliment (figure 7) est définie entre les plaques de chauffe inférieure 61 et supérieure 63.

Les moyens 69 d'estimation de la surface (Z) comprennent le capteur de température 11 ou les capteurs 11a, 11b précités.

Pour mener à bien au mieux l'estimation de la surface (Z) occupée par l'aliment 80, on recommande en outre que les moyens 71 de calcul du temps de cuisson (T) de l'aliment comprennent le microcontrôleur 73 configuré pour déterminer la pente de la courbe de température obtenue à partir des mesures précitées de température.

Et, dans le même but, on conseille par ailleurs qu'avec ces mesures de température, ce microcontrôleur, ou un autre 75 :

- régule la température de la plaque de chauffe 61 ou 63, et
- fasse évoluer la quantité d'énergie à fournir, par la ou les résistance(s) 10, en fonction de l'importance de la surface occupée par lesdits aliments sur la plaque de chauffe considérée, afin donc de compenser les chutes de température liées au placement de ces aliments entre les plaques.

Les microcontrôleurs 73,75 peuvent être réunis dans un microcontrôleur central 77. Le(s) microcontrôleur(s) est/sont relié(s) aux moyens précités 65,66,67,69/11(ou 11a,11b),70,71,72,79 et aux résistances 10, pour leur pilotage.

Concernant la prise en compte du degré (X) interne de cuisson à atteindre de l'aliment, on a déjà compris qu'on peut se passer de l'étape évoquée plus haut de sélection par l'utilisateur de l'une desdites températures mises en mémoire à cette fin (Il est rappelé que les étapes précitées de mise en mémoire 72, en usine, de données, algorithmes... comme précité sont toujours réalisées de façon identique).

Dans ce cas, lorsque l'utilisateur va décider d'utiliser l'appareil qu'il vient d'acheter, il lui suffit d'enclencher ce dernier qui se place en mode préchauffage, de la manière déjà expliquée.

Se déroule alors ce qui suit :

- alors que l'appareil fonctionne et pour atteindre une cuisson interne plus ou moins importante de l'aliment alors souhaitée par un utilisateur, l'utilisateur met l'aliment en contact avec la ou les plaque(s) de chauffe, telle(s) 61,63,

- l'appareil calcule alors un premier temps de cuisson (T) de l'aliment ainsi disposé, en fonction de la température (X) la plus basse parmi celles mises en mémoire,
- à l'issue de ce premier temps de cuisson (T) calculé, l'appareil indique à l'utilisateur l'atteinte de la cuisson correspondante (via par exemple l'indicateur 79), puis :

  - si l'utilisateur ne retire pas l'aliment, l'appareil applique automatiquement un second temps calculé de cuisson (T) de l'aliment, en fonction de la seconde dans l'ordre croissant des dites températures mises en mémoire (X) ; on comprend bien de ce qui précède que ce second temps de cuisson calculé permet d'accroître la cuisson de l'aliment qui sera ainsi davantage cuit,
  - à l'issue de ce second temps de cuisson (T) calculé, l'appareil indique à nouveau à l'utilisateur l'atteinte de la cuisson correspondante,
  - et ainsi de suite.

Comme déjà expliqué, l'appareil va, en cours de fonctionnement :

- mesurer l'épaisseur (Y) de l'aliment alors disposé contre ladite plaque de chauffe et/ou estimer la surface (Z) occupée par cet aliment sur cette plaque de chauffe,
- calculer le temps de cuisson (T) de l'aliment ainsi disposé, en fonction :

  * outre de ladite température (X) de cuisson interne parmi celles mises en mémoire,
  * de l'épaisseur (Y) de l'aliment et/ou de la surface (Z) occupée par l'aliment.

Pour le reste, les explications ont déjà été fournies ; elles demeurant valables.

A noter par contre, qu'il est ici considéré qu'un appareil de cuisson chauffé électriquement, par résistances répondrait à la problématique déjà évoquée, dès lors qu'il comprendrait :

- outre au moins un plaque de chauffe où disposer l'aliment à cuire, et en liaison avec un microcontrôleur (tel 73,75,77) prévu dans l'appareil,
- des moyens d'estimation d'une surface (Z) occupée par l'aliment sur la plaque de chauffe, via au moins un capteur de température (tel 11,11a,11a) qui:

  * régule la température de la plaque de chauffe dont il mesure la température, et
  * fait évoluer la quantité d'énergie électrique à fournir, en fonction de l'importance de la surface occupée par l'aliment sur la plaque de chauffe, afin de compenser les chutes de température liées au placement de l'aliment, ou des aliments, sur l'une des plaques de chauffe, ou entre ces plaques de chauffe.

Les moyens d'estimation d'une surface (Z) pourront être ceux de la description des pages précédentes.

Concernant l'appareil concerné par le présent sujet, il pourrait aussi s'agir d'un appareil ne comprenant qu'une seule plaque de chauffe pour la cuisson par contact de l'aliment.

Une poêle ou tout ustensile de cuisine à calotte recevant à son contact un aliment à cuire (casserole, faitout..) devrait pouvoir convenir, dès lors qu'il serait relié à une source de chaleur pilotable comme on l'a compris de ce qui précède.

Notamment dans ce cas, on pourrait prévoir que le moyen de mesure de l'épaisseur (Y) de l'aliment placé en contact avec la plaque de chauffe soit un couvercle disposable de façon mobile sur l'ustensile et pourvu du capteur adapté déjà évoqué. Le couvercle pourrait être annulaire.

Pour favoriser le contact aliment/plaque(s) de chauffe, chaque plaque sera, en toute hypothèse de préférence pleine. Une solution grille ne serait alors pas adaptée.

Dans ce qui précède, en référence aux solutions illustrées, on a prévu que la ou chaque valeur (utile) de température (X) de cuisson interne de l'aliment soit préenregistrée en mémoire de l'appareil, en usine, avant la première utilisation opérationnelle de cet appareil. On pourrait toutefois prévoir que cette(ces) donnée(s) soi(en)t entrée(s) en mémoire 72 par l'utilisateur, par exemple via l'interface 67. Ainsi, on peut prévoir que l'utilisateur entre en mémoire 72 une valeur de température (X) de cuisson de 45°C, pour une viande souhaitée saignante. Dans ce cas, il pourrait n'y avoir, en usine (donc avant commercialisation de l'appareil), aucune mise en mémoire notamment de la/de différentes températures (X) de cuisson internes de l'aliment.

On notera par ailleurs, qu'utilisé seul, indépendamment de la combinaison des autres caractéristiques précitées, le procédé suivant répondrait aussi à la problématique évoquée ci-avant : Procédé de mise en oeuvre d'un appareil de cuisson chauffé électriquement et comprenant au moins une plaque de chauffe où disposer un aliment (pour une cuisson par contact), ledit procédé comprenant une étape de préchauffage A) de l'appareil suivi d'une étape de cuisson de l'aliment B), le début de l'étape de cuisson B) étant matérialisé, et possiblement détecté, par un abaissement au-delà d'un seuil prédéterminé de la température de la plaque de chauffe.

## Revendications

1. Procédé de mise en oeuvre d'un appareil (1) de cuisson d'un aliment, comprenant au moins une enveloppe (9, 90) comportant une plaque de chauffe (61, 63) cuisant par contact l'aliment, et une ou des résistances chauffantes (10) disposées entre l'enveloppe et la plaque de chauffe, selon le procédé :

   - on met en mémoire (72) de l'appareil (1) différentes températures de cuisson internes de l'aliment,
   - on réalise la mise en contact de cet aliment avec la ou les plaques de chauffe (61, 63),
   - on mesure l'épaisseur (Y) de l'aliment ainsi disposé et/ou on estime de la surface (Z) occupée par cet aliment sur la plaque de chauffe (61, 63), et
   - à l'issue d'un temps de chauffage de l'aliment par la ou les résistance(s) (10), on fait indiquer par l'appareil (1), à un utilisateur, une information visuelle en liaison avec la cuisson de l'aliment qui est fonction d'au moins une valeur de température (X) de cuisson interne de l'aliment mémorisée dans l'appareil,

   le procédé étant **caractérisé en ce qu'**on réalise un calcul par l'appareil du temps de cuisson de l'aliment en fonction de l'une au moins des températures mémorisées (X) et de l'épaisseur (Y) de l'aliment, et/ou de la surface (Z) qu'il occupe.

2. Procédé selon la revendication 1, **caractérisé en ce que** la ou chaque valeur de température (X) de cuisson interne de l'aliment mise en mémoire (72) de l'appareil (1) est préenregistrée en usine, avant la première utilisation opérationnelle de l'appareil (1).

3. Procédé selon l'une des revendications 1 à 2, **caractérisé en ce que** l'appareil (1) indique ladite information à l'utilisateur notamment à l'issue du temps de cuisson (T) calculé.

4. Procédé selon l'une des revendications 1 à 3, **caractérisé en ce que**, l'appareil (1) fonctionnant et alors que l'aliment est en contact avec la ou les plaques de chauffe (61, 63), il mesure la température de l'une au moins des plaques de chauffe et calcule le temps de cuisson de l'aliment également en fonction de cette température mesurée.

5. Procédé selon l'une des revendications 1 à 4, **caractérisé en ce que**, l'appareil (1) fonctionnant et avant que l'aliment soit en contact avec la ou les plaque(s) de chauffe (61, 63), il mesure la température de l'une au moins des plaques de chauffe et, à l'atteinte d'une température prédéterminée de préchauffage, adresse à l'utilisateur l'information qui le lui indique.

6. Procédé selon l'une des revendications 1 à 5, **caractérisé en ce que** :

   - on calcule le temps de cuisson (T) de l'aliment par calcul d'un premier temps de cuisson (T), en fonction de la température (X) la plus basse parmi celles mises en mémoire (72),
   - à l'issue dudit premier temps de cuisson (T) calculé, l'indication à l'utilisateur, par l'appareil (1), de l'atteinte de la cuisson correspondante, puis :

     - si l'utilisateur ne retire pas l'aliment, l'application par l'appareil d'un second temps calculé de cuisson (T) de l'aliment, en fonction de la seconde dans l'ordre croissant desdites températures mises en mémoire (X),
     - à l'issue de ce second temps de cuisson (T) calculé, à nouveau une indication à l'utilisateur, par l'appareil, de l'atteinte de la cuisson correspondante,
     - et ainsi de suite.

7. Procédé selon l'une des revendications 1 à 6, **caractérisé en ce que**, lors dudit fonctionnement de l'appareil, on dispose l'aliment entre plusieurs dites plaques de chauffe (61, 63), à leurs contacts.

8. Procédé de cuisson selon la revendication 5, ou cette revendication 5 et l'une des revendications 6 à 7, **caractérisé en ce que** :

- il comprend l'une au moins des étapes suivantes :

* sélection de la catégorie de l'aliment à cuire,
* sélection de l'état de congélation de l'aliment,
* sélection d'un marquage de gril souhaité de l'aliment,

- et la température de préchauffage dépend de la ou desdites sélections effectuées et est sélectionnée par l'appareil (1) parmi plusieurs températures préalablement enregistrées en mémoire (72).

9. Procédé de cuisson selon la revendication 4 ou 5, ou l'une de ces revendications combinée à la revendication 6, **caractérisé en ce qu'**à l'issue de l'étape (A) de préchauffage de l'appareil (1), le début de l'étape de cuisson (B) de l'aliment est détecté par un abaissement au-delà d'un seuil prédéterminé de la température mesurée de la ou de l'une des plaques de chauffe (61, 63).

10. Appareil de cuisson pour la mise en oeuvre du procédé selon l'une des revendications 1 à 9, l'appareil (1) comprenant au moins une enveloppe (9, 90) comportant une plaque de chauffe (61, 63) pour cuire à son contact un aliment, l'appareil (1) comprenant, pour pouvoir délivrer à un utilisateur l'aliment avec une cuisson interne telle qu'il la souhaite:

- une mémoire (72) pour stocker différentes températures (X) de cuisson internes de l'aliment,
- des moyens (79) d'indication à l'utilisateur, par l'appareil (1), d'une information visuelle en liaison avec la cuisson de l'aliment à l'issue dudit temps de cuisson calculé, lequel est fonction d'au moins une des valeurs stockées de température (X) de cuisson, **caractérisé en ce que** l'appareil (1) comprenant en outre :

- des moyens (65) de mesure de l'épaisseur (Y) de l'aliment alors disposé au contact de la ou des plaque(s) de chauffe (61, 63) et/ou des moyens (69) d'estimation de la surface (Z) occupée par cet aliment sur la ou l'une des plaques de chauffe (61, 63),
- des moyens (71) de calcul d'au moins un temps de cuisson (T) de l'aliment ainsi disposé, en fonction :

* de l'une au moins des températures (X) de cuisson internes parmi celles mises en mémoire (72),
* de l'épaisseur (Y) de l'aliment, et/ou de la surface (Z) occupée par l'aliment.

11. Appareil selon la revendication 10, **caractérisé en ce que** les moyens (79) d'indication comprennent :

- un afficheur lumineux (83),
- un référentiel chromatique (85) présentant plusieurs couleurs ou intensités de couleur, et
- des moyens (87) pour faire varier la couleur ou l'intensité de couleur de l'afficheur (79), d'une couleur ou l'intensité de couleur du référentiel (85) à une autre.

12. Appareil selon la revendication 10 ou la revendication 11, **caractérisé en ce qu'**il comprend au moins un capteur de température (11, 11a, 11b) de la ou des plaque(s) de chauffe (61, 63) reliés aux moyens (79) d'indication, pour leurs faire indiquer à l'utilisateur une information d'atteinte d'une température prédéterminée de préchauffage stockée en mémoire (72).

13. Appareil selon la revendication 11 ou les revendications 11 et 12, **caractérisé en ce que** :

- l'afficheur lumineux (83) comprend des diodes électroluminescentes multicolores (830),
- et les moyens comprennent des moyens (870) pour enchaîner les couleurs ou intensités de couleur par variations de coordonnées chromatiques.

**Patentansprüche**

1. Verfahren zum Umsetzen eines Geräts (1) zum Kochen eines Lebensmittels, das mindestens einen Mantel (9, 90) umfasst, der eine Heizplatte (61, 63) umfasst, die das Lebensmittel durch Berührung kocht, und einen oder mehrere Heizwiderstände (10), die zwischen dem Mantel und der Heizplatte angeordnet sind, wobei man gemäß dem Verfahren:

- in den Speicher (72) des Geräts (1) unterschiedliche interne Kochtemperaturen des Lebensmittels gibt,

- die Berührung dieses Lebensmittels mit der oder den Heizplatten (61, 63) herstellt,
- die Dicke (Y) des Lebensmittels, das derart angeordnet ist, misst und/oder von der Oberfläche (Z), die von diesem Lebensmittel auf der Heizplatte (61, 63) belegt wird, schätzt, und
- nach einer Heizzeit des Lebensmittels durch den oder die Widerstände (10), einem Benutzer von dem Gerät (1) eine visuelle Information in Verbindung mit dem Kochen des Lebensmittels, die von mindestens einem Temperaturwert (X) des Kochens innerhalb des Lebensmittels, der in dem Gerät gespeichert ist, abhängt, angibt,

wobei das Verfahren **dadurch gekennzeichnet ist, dass** man eine Berechnung der Kochzeit des Lebensmittels durch das Gerät in Abhängigkeit von gespeicherten Temperaturen (X) und/oder der Stärke (Y) des Lebensmittels und/oder der Oberfläche (Z), die es belegt, ausführt.

2. Verfahren nach Anspruch 1, **dadurch gekennzeichnet, dass** der oder jeder Temperaturwert (X) des internen Kochens des Lebensmittels, der in den Speicher (72) des Geräts (1) gegeben wird, werkseitig im Vorab vor dem ersten betrieblichen Gebrauch des Geräts (1) registriert wird.

3. Verfahren nach einem der Ansprüche 1 bis 2, **dadurch gekennzeichnet, dass** das Gerät (1) dem Benutzer die Information insbesondere nach der berechneten Kochzeit (T) angibt.

4. Verfahren nach einem der Ansprüche 1 bis 3, **dadurch gekennzeichnet, dass** das Gerät (1) beim Betrieb und während das Lebensmittel mit der oder den Heizplatten (61, 63) in Berührung ist, die Temperatur mindestens einer der Heizplatten misst und die Kochzeit des Lebensmittels auch in Abhängigkeit von dieser gemessenen Temperatur berechnet.

5. Verfahren nach einem der Ansprüche 1 bis 4, **dadurch gekennzeichnet, dass** das Gerät (1) beim Betrieb und bevor das Lebensmittel mit der oder den Heizplatten (61, 63) in Berührung ist, die Temperatur mindestens einer der Heizplatten misst, und, beim Erreichen einer vorbestimmten Vorheiztemperatur, die Information, die dies angibt, an den Benutzer richtet.

6. Verfahren nach einem der Ansprüche 1 bis 5, **dadurch gekennzeichnet, dass**:

- man die Kochzeit (T) des Lebensmittels durch Berechnung einer ersten Kochzeit (T) in Abhängigkeit von der niedrigsten Temperatur (X) unter den in den Speicher (72) gegebenen berechnet,
- am Ende der ersten berechneten Kochzeit (T) Angabe an den Benutzer des Erreichens der entsprechenden Kochzeit durch das Gerät (1), dann:
- falls der Benutzer das Lebensmittel nicht entfernt, Anwendung durch das Gerät einer zweiten Kochzeit (T) des Lebensmittels, die in Abhängigkeit von der zweiten Temperatur in zunehmender Reihenfolge der Temperaturen, die in den Speicher (X) gegeben wurden, berechnet wird,
- nach Ablaufen dieser berechneten zweiten Kochzeit (T), erneut Angabe an den Benutzer des Erreichens des entsprechenden Kochens durch das Gerät,
- usw.

7. Verfahren nach einem der Ansprüche 1 bis 6, **dadurch gekennzeichnet, dass** man bei dem Betrieb des Geräts das Lebensmittel zwischen mehreren der Heizplatten (61, 63) in Berührung mit ihnen anordnet.

8. Verfahren nach Anspruch 5 oder diesem Anspruch 5 und einem der Ansprüche 6 bis 7, **dadurch gekennzeichnet, dass**:

- es mindestens einen der folgenden Schritte umfasst:

-- Auswahl der Kategorie des zu kochenden Lebensmittels,
-- Auswahl des Tiefkühlzustands des Lebensmittels,
-- Auswahl einer gewünschten Grillmarkierung des Lebensmittels,

- und die Vorheiztemperatur von der oder den ausgewählten Auswahlen abhängt und von dem Gerät (1) aus mehreren vorab in dem Speicher (72) aufgezeichneten Temperaturen ausgewählt wird.

9. Kochverfahren nach Anspruch 4 oder 5 oder einem dieser Ansprüche kombiniert mit Anspruch 6, **dadurch gekennzeichnet, dass** nach dem Vorheizschritt (A) des Geräts (1) der Beginn des Kochschritts (B) des Lebensmittels durch ein Sinken der Temperatur unter einen vorbestimmten Schwellenwert der einen oder mehreren Heizplatten (61, 63) erfasst wird.

10. Kochgerät zur Umsetzung des Verfahrens nach einem der Ansprüche 1 bis 9, wobei das Gerät (1) mindestens einen Mantel (9, 90) umfasst, der eine Heizplatte (61, 63) zum Kochen eines Lebensmittels in Berührung mit ihr umfasst,
wobei das Gerät (1), um einem Benutzer das Lebensmittel mit einem inneren Kochen wie er es wünscht, liefern zu können, Folgendes umfasst:

- einen Speicher (72) zum Speichern unterschiedlicher interner Kochtemperaturen (X) des Lebensmittels,
- Mittel (79) zum Angeben für den Benutzer durch das Gerät (1) einer visuellen Information in Zusammenhang mit dem Kochen des Lebensmittels nach der berechneten Kochzeit, die von mindestens einem der gespeicherten Kochtemperaturwerte (X) abhängt,

dadurch gekennzeichnet, dass das Gerät (1) außerdem Folgendes umfasst:

- Mittel (65) zum Messen (Y) der Stärke des Lebensmittels, während es in Berührung mit der oder den Heizplatten (61, 63) angeordnet ist, und/oder Mittel (69) zum Schätzen der Oberfläche (Z), die dieses Lebensmittel auf der einen oder mehreren Heizplatte (61, 63) belegt,
- Mittel (71) zum Berechnen mindestens einer Kochzeit (T) des derart angeordneten Lebensmittels in Abhängigkeit von:

-- mindestens einer der internen Kochtemperaturen (X) aus den in den Speicher (72) gegebenen,
-- der Dicke (Y) des Lebensmittels und/oder der Oberfläche (Z), die das Lebensmittel belegt.

11. Gerät nach Anspruch 10, dadurch gekennzeichnet, dass die Angabemittel (79) Folgendes umfassen:

- einen Leuchtanzeiger (83),
- ein Farbreferenzwerk (85), das mehrere Farben oder Farbstärken aufweist, und
- Mittel (87), um die Farbe oder die Farbstärke des Anzeigers (79) von einer Farbe oder Farbstärke des Referenzwerks (85) zu einer anderen variieren zu lassen.

12. Gerät nach Anspruch 10 oder Anspruch 11, dadurch gekennzeichnet, dass es mindestens einen Temperatursensor (11, 11a, 11b) der Heizplatte oder Heizplatten (61, 63) umfasst, die mit dem Anzeigemittel (79) verbunden sind, um sie dem Benutzer eine Information des Erreichens einer vorbestimmten Vorheiztemperatur, die im Speicher (72) gespeichert ist, anzeigen zu lassen.

13. Gerät nach Anspruch 11 oder nach den Ansprüchen 11 und 12, dadurch gekennzeichnet, dass:

- die Leuchtanzeige (83) mehrfarbige Licht emittierende Dioden (830) umfasst,
- und die Mittel Mittel (870) zum Verketten der Farben oder Farbstärken durch Variationen chromatischer Koordinaten umfassen.

**Claims**

1. Method for using an apparatus (1) for cooking food, comprising at least one envelope (9, 90) comprising a heating plate (61, 63) that cooks the food via contact, and one or more heating resistors (10) positioned between the envelope and the heating plate, according to the method:

- various internal cooking temperatures for the food are stored in the memory (72) of the apparatus (1),
- placing of this food in contact with the heating plate or plates (61, 63),
- the thickness (Y) of the food thus positioned is measured and/or the surface (Z) occupied by this food on the heating plate (61, 63) is estimated, and
- after a period of heating the food by the resistor(s) (10), the apparatus (1) indicates, to a user, a piece of visual information related to the cooking of the food that is dependent on at least one internal cooking temperature (X) value for the food memorised in the apparatus,

the method being **characterised in that** the apparatus calculates the cooking time for the food on the basis of at least one of the temperatures (X) memorised and the thickness (Y) of the food, and/or the surface (Z) the food occupies.

2. Method according to claim 1, **characterised in that** the or each internal cooking temperature (X) value for the food memorised (72) in the apparatus (1) is factory pre-recorded, before the first operational use of the apparatus (1).

3. Method according to one of claims 1 to 2, **characterised in that** the apparatus (1) indicates said information to the user in particular after the cooking time (T) calculated.

4. Method according to one of claims 1 to 3, **characterised in that**, when the apparatus (1) is operating and while the food is in contact with the heating plate or plates (61, 63), it measures the temperature of at least one of the heating plates and calculates the cooking time for the food also on the basis of this measured temperature.

5. Method according to one of claims 1 to 4, **characterised in that**, when the apparatus (1) is operating and before the food is in contact with the heating plate or plates (61, 63), it measures the temperature of at least one of the heating plates and, when a predetermined preheating temperature is reached, addresses, to the user, the information that indicates this fact to the user.

6. Method according to one of claims 1 to 5, **characterised in that**:

   - the cooking time (T) for the food is calculated by calculating a first cooking time (T), according to the lowest temperature (X) out of the temperatures memorised (72),
   - after said first calculated cooking time (T), the indication, to the user, by the apparatus (1), that the corresponding cooking has been achieved, then:

      - if the user does not remove the food, the applying, by the apparatus, of a second calculated cooking time (T) for the food, according to the second of said memorised temperatures (X) in increasing order,
      - after this second calculated cooking time (T), again an indication, to the user, by the apparatus, that the corresponding cooking has been achieved,
      - and so on.

7. Method according to one of claims 1 to 6, **characterised in that**, during said operation of the apparatus, the food is placed between a plurality of said heating plates (61, 63), in contact with said plates.

8. Cooking method according to claim 5, or this claim 5 and one of claims 6 to 7, **characterised in that**:

   - said method comprises at least one of the following steps:

      * selecting the category of the food to be cooked,
      * selecting the state of frozenness of the food,
      * selecting a desired grill marking of the food,

   - and the preheating temperature is dependent on the or said selections carried out and is selected by the apparatus (1) from a plurality of temperatures previously stored in the memory (72).

9. Cooking method according to claim 4 or 5, or one of these claims combined with claim 6, **characterised in that** after the step (A) of preheating the apparatus (1), the beginning of the step of cooking (B) the food is detected by a lowering, beyond a predetermined threshold, of the measured temperature of the or of one of the heating plates (61, 63).

10. Cooking apparatus for implementing the method according to one of claims 1 to 9, the apparatus (1) comprising at least one envelope (9, 90) comprising a heating plate (61, 63) for cooking food in contact with said plate, the apparatus (1) comprising, in order to be able to deliver, to a user, the food internally cooked as desired by the user:

   - a memory (72) for storing various internal cooking temperatures (X) for the food,
   - means (79) for the apparatus (1) to indicate, to the user, a piece of visual information related to the cooking of the food after said calculated cooking time, which is dependent on at least one of the memorised cooking temperature (X) values,

**characterised in that** the apparatus (1) further comprises:

- means (65) for measuring the thickness (Y) of the food thus placed in contact with the heating plate or plates (61, 63) and/or means (69) for estimating the surface (Z) occupied by this food on the or one of the heating plates (61, 63),
- means (71) for calculating at least one cooking time (T) for the food thus placed, according:

* to at least one of the internal cooking temperatures (X) out of those memorised (72),
* to the thickness (Y) of the food and/or to the surface (Z) occupied by the food.

11. Apparatus according to claim 10, **characterised in that** the indication means (79) comprise:

- a light display (83),
- a chromatic reference (85) presenting a plurality of colours or colour intensities, and
- means (87) for varying the colour or the colour intensity of the display (79), from one colour or colour intensity of the reference (85) to another.

12. Cooking apparatus according to claim 10 or claim 11, **characterised in that** said apparatus comprises at least one temperature sensor (11, 11a, 11b) of the heating plate or plates (61, 63) connected to the indication means (79), in order to make them indicate, to the user, a piece of information that a predetermined preheating temperature stored in memory (72) has been reached.

13. Apparatus according to claim 11 or claims 11 and 12, **characterised in that**:

- the light display (83) comprises multicolour light-emitting diodes (830),
- and the means comprise means (870) for creating a sequence of the colours or colour intensities via variations of chromatic coordinates.

**Fig. 1**

Fig. 2

Fig. 3

**Fig. 4**

**Fig. 5**

**Fig. 6**

**Fig. 7**

**Fig. 8**

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 4302190
- WO 2007149063 A

- US 2011062141 A